# EUROPEAN PATENT APPLICATION

(11) **EP 4 633 294 A1**
(43) Date of publication of application: **15.10.2025**
(21) Application number: 25153750.2
(22) Date of filing: 24.01.2025
(51) Int. Cl.: H05B 47/14, H05B 47/175

(54) **METHOD AND APPARATUS FOR CONTROLLING LIGHT BODY**

(30) Priority: 08.04.2024 CN 202410411889
(71) Applicant: Aputure Imaging Industries Co., Ltd., Shenzhen, Guangdong 518110 (CN)
(72) Inventor: Huang, Haifeng, Shenzhen, Guangdong, 518110 (CN)
(74) Representative: Petraz, Gilberto Luigi

(57) **Abstract**

Disclosed in the present application are a method and an apparatus for controlling light body. The light body control method includes: receiving light control data transmitted by the light control device, the light control data including first address information, answering information and control data, the answering information being configured to represent whether feedback data corresponding to the control data needs to be transmitted to the light control device; comparing the first address information with pre-stored second address information, the second address information being address information corresponding to the target light body; and performing, if the first address information matches the second address information, a control operation corresponding to the control data based on the answering information. The embodiments of the present application are capable of realizing overall control of a plurality of light bodies by a light control device, and capable of improving the accuracy of the light body control.

## Description

### TECHNICAL FIELD

The present application relates to the technical field of lighting equipment, and in particular, to a method and an apparatus for controlling light body, a computer device and a storage medium.

### BACKGROUND

With the improvement of people's living standards and the development of lighting technology, usage scenarios of a variety of lights, such as stage lights, photography lights, and landscape lights, become more and more complex, and more and more light bodies are used in various scenarios. However, in the related technology, each light body is controlled by a light control device, resulting in that each light body needs to be configured with a light control device, so that it is difficult to realize the overall control of a plurality of light bodies.

### SUMMARY

Provided in embodiments of the present application are a method and an apparatus for controlling light body, a computer device and a storage medium, which are capable of realizing overall control of a plurality of light bodies by a light control device, and capable of improving the accuracy of the light body control.

In a first aspect, provided in the present application is a method for controlling light body, applied in a target light body of a light body control system. The light body control system includes a light control device and a plurality of light bodies communicatively connected to the light control device, the target light body is one light body of the plurality of light bodies, and the method for controlling light body includes:
receiving light control data transmitted by the light control device, the light control data including first address information, answering information and control data, the answering information being configured to represent whether feedback data corresponding to the control data needs to be transmitted to the light control device;
comparing the first address information with pre-stored second address information, the second address information being address information corresponding to the target light body; and
performing, if the first address information matches the second address information, a control operation corresponding to the control data based on the answering information.
In some implementations of the present application, the light control data further includes first sequence number information, and the performing the control operation corresponding to the control data based on the answering information includes:
determining, based on the answering information, whether the feedback data corresponding to the control data needs to be transmitted to the light control device;
comparing, if the feedback data corresponding to the control data do not need to be transmitted to the light control device, the first sequence number information with pre-stored second sequence number information, the second sequence number information being the last stored sequence number information of the target light body; and
performing, if the first sequence number information is not matched with the second sequence number information, the control operation corresponding to the control data.

In some implementations of the present application, after the determining, based on the answering information, whether the feedback data corresponding to the control data needs to be transmitted to the light control device, the method includes:
performing, if the feedback data corresponding to the control data needs to be transmitted to the light control device, the control operation corresponding to the control data and transmitting the feedback data corresponding to the control operation to the light control device.

In some implementations of the present application, the control data includes a first setting instruction, and/or a data read instruction, and/or an upgrade instruction, and the performing a control operation corresponding to the control data and transmitting feedback data corresponding to the control operation to the light control device includes:
performing a first setting operation corresponding to the first setting instruction and transmitting a setting result corresponding to the first setting operation to the light control device;
   and/or,
determining target data based on the data read instructions, packaging the target data, and transmitting the packaged target data to the light control device;
   and/or,
performing, based on the upgrade instruction, an upgrade operation, and transmitting an upgrade result corresponding to the upgrade operation to the light control device.

In some implementations of the present application, the light control data further includes protocol header information and a first check code, and before the comparing the first address information with the pre-stored second address information, the method further includes:
checking the protocol header information, so as to obtain a first checking result; and
checking, if the first checking result is a check pass, the first check code based on the control data, so as to obtain a second checking result.

In a second aspect, provided in the present application is a method for controlling light body, applied in a light control device of a light body control system. The light body control system includes the light control device and a plurality of light bodies communicatively connected to the light control device, and the method includes:
acquiring control data and a candidate light body corresponding to the control data, the candidate light body being at least one light body of the plurality of light bodies;
determining answering information corresponding to the control data, the answering information being configured to represent whether feedback data corresponding to the control data needs to be transmitted to the light control device;
packaging, based on the answering information and the first address information, the control data, so as to obtain light control data, the first address information being address information corresponding to the candidate light body; and
transmitting the light control data to the plurality of light bodies, so as to cause a target light body in the plurality of light bodies to perform a control operation corresponding to the control data based on the first address information and the answering information.

In some implementations of the present application, the determining answering information corresponding to the control data includes:
acquiring a data type of the control data, the data type including a first type and a second type;
determining, if the data type is the first type, the answering information corresponding to the control data to be first information, the first information being configured to represent that feedback data corresponding to the control data do not need to be transmitted to the light control device; and
determining, if the data type is the second type, the answering information corresponding to the control data to be second information, the second information being configured to represent that the feedback data corresponding to the control data needs to be transmitted to the light control device.

In some implementations of the present application, if the control data is a first setting instruction, the transmitting the light control data to the plurality of light bodies includes:
adding the light control data to a tail node of a pre-constructed linked list, and transmitting node data in the linked list to the plurality of light bodies in accordance with a preset first timing time and a preset number of times.

In some implementations of the present application, if the control data includes a plurality of data subitems and the plurality of data subitems are different first data read instructions, the transmitting the light control data to the plurality of light bodies includes:
determining, based on a second timing time for each of the plurality of data subitems, a timeout time for each of the plurality of data subitems;
performing, based on the timeout time, timeout sorting on the plurality of data subitems, so as to obtain a timeout sorting result for the plurality of data subitems; and
transmitting, based on the timeout sorting result, the plurality of data subitems to the plurality of light bodies.

In a third aspect, provided in the present application is an apparatus for controlling light body, applied in a target light body of a light body control system, the light body control system includes a light control device and a plurality of light bodies communicatively connected to the light control device, the target light body is one light body of the plurality of light bodies, and the apparatus includes:
a data receiving unit, configured to receive light control data transmitted by the light control device, the light control data including first address information, answering information and control data, the answering information configured to represent whether feedback data corresponding to the control data needs to be transmitted to the light control device;
a data matching unit, configured to compare the first address information with pre-stored second address information, the second address information being address information corresponding to the target light body; and
operation performing unit, configured to perform a control operation corresponding to the control data based on the answering information if the first address information matches the second address information.

In a third aspect, provided in the present application is a computer device, including:
one or more processors;
a memory; and
one or more application programs. The one or more application programs are stored in the processor, and configured to be executed by the one or more processors to implement the method for controlling light body in any one implementation of the first aspect.

In a fifth aspect, further provided in the present application is a non-transitory computer readable storage medium with a computer program stored thereon. The computer program is loaded by a processor to cause steps in the method for controlling light body in any one implementation of the first aspect to be executed.

In the present application, the first address information is compared with the pre-stored second address information, the control operation corresponding to the control data is performed based on the answering information if the first address information matches the second address information, and after the light control device transmits the light control data to the plurality of light bodies, the target light body in the plurality of light bodies can determine whether the control operation corresponding to the control data is performed based on the first address information, so as to realize overall control of the plurality of light bodies through a single light control device. After it is determined that the control operation corresponding to the control data needs to be performed, the control operation corresponding to the control data is performed based on the answering information, which is capable of improving the accuracy of the light body control.

### BRIEF DESCRIPTION OF THE DRAWINGS

In order to illustrate the technical solutions of the embodiments of the present application more clearly, the following drawings are briefly described as required in the context of the embodiments. Obviously, the following drawings illustrate only some of the embodiments of the present disclosure. Other relevant drawings may be obtained on the basis of these drawings without any creative effort by those skilled in the art.
Fig. 1 is a flowchart of a method for controlling light body provided according to an embodiment of the present application;
Fig. 2 is a flowchart of specific process of performing a control operation based on answering information provided according to an embodiment of the present application;
Fig. 3 is a flowchart of specific process of the control data checking provided according to an embodiment of the present application;
Fig. 4 is a flowchart of a method for controlling light body provided according to another embodiment of the present application;
Fig. 5 is a flowchart of specific process of determining answering information provided according to an embodiment of the present application;
Fig. 6 is a schematic diagram of an apparatus for controlling light body provided according to an embodiment of the present application;
Fig. 7 is a schematic diagram of an apparatus for controlling light body provided according to another embodiment of the present application; and
Fig. 8 is a schematic diagram of a computer device provided according to an embodiment of the present application.

### DETAILED DESCRIPTION

The technical solutions in the embodiments of the present application are clearly and completely described and discussed below in conjunction with the attached drawings of the embodiments of the present application. Obviously, the embodiments described herein are only some of the embodiments of the present application but not all of them. Based on the embodiments in the present disclosure, all other embodiments obtained by those skilled in the art without creative efforts fall within the scope of protection of the present disclosure.

In the description of the present disclosure, it is to be noted that the terms "center", "vertical", "horizontal", "up", "down", "front", "back", "left", "right", "vertical", "horizontal", "top", "bottom", "inside", "outside" and other orientation or position relationships are based on the orientation or position relationships shown in the attached drawings. It is only intended to facilitate description of the present disclosure and simplify description, but not to indicate or imply that the referred device or element has a specific orientation, or is constructed and operated in a specific orientation. Therefore, they should not be construed as a limitation of the present disclosure. Furthermore, the related terms "first", and "second" are used for descriptive purposes only and are not to be understood as indicating or implying relative importance or implicitly specifying the number of technical features indicated. As a result, a feature defined with the terms such as "first" and "second" may expressly or implicitly include one or more such features. In the description of the present invention, unless otherwise illustrated, "plurality" means two or more.

In the present application, the word "exemplary" is used to mean "used as an example, illustration or description". Any embodiment described as "exemplary" in the present application is not necessarily to be explained as preferred or advantageous over other embodiments. The following description is given to enable those skilled in the art to realize and use the present application. In the following description, details are listed for explanatory purposes. It should be appreciated that those skilled in the art can recognize that the present application can be implemented without the use of these particular details. In other examples, the publicly known structures and processes will not be elaborated to avoid making the description of the present application obscure with unnecessary details. Accordingly, the present application is not intended to be limited to the embodiments shown, but is consistent with the broadest scope according with the principles and features disclosed herein.

It is to be noted that a method in an embodiment of the present application is executed in a computer device, and all of the processing objects of each computer device exist in the form of data or information, for example, time, which is essentially time information. It is to be understood that, if dimensions, quantities, positions, etc., are mentioned in the subsequent embodiments, all of them exist in the form of corresponding data to be processed by the computer device, which will not be repeated herein.

The inventor found that the existing various lighting device can be basically divided into two kinds: ① a light body and a light controlling box that are separately provided; ② a light body and a light controlling box that are integrated. Whether it is the light body and the light control box that are separately provided or the light body and light control box that are integrated, a light body is controlled through a light control device, resulting in that each light body needs to be configured with a light control device, so that it is difficult to realize the overall control of a plurality of light bodies.

Based on this, light control data transmitted by the light control device are received, the light control data including first address information, answering information and control data, the answering information being configured to represent whether feedback data corresponding to the control data needs to be transmitted to the light control device; the first address information is compared with pre-stored second address information, the second address information being address information corresponding to the target light body; and if the first address information matches the second address information, a control operation corresponding to the control data is performed based on the answering information. In the present application, after the light control device transmits the light control data to the plurality of light bodies, the target light body in the plurality of light bodies can determine whether the control operation corresponding to the control data is performed based on the first address information, so as to realize overall control of the plurality of light bodies through a single light control device. After it is determined that the control operation corresponding to the control data needs to be performed, the control operation corresponding to the control data is performed based on the answering information, which is capable of improving the accuracy of the light body control.

The contents of the present application are further illustrated through the description of embodiments below in conjunction with the attached drawings.

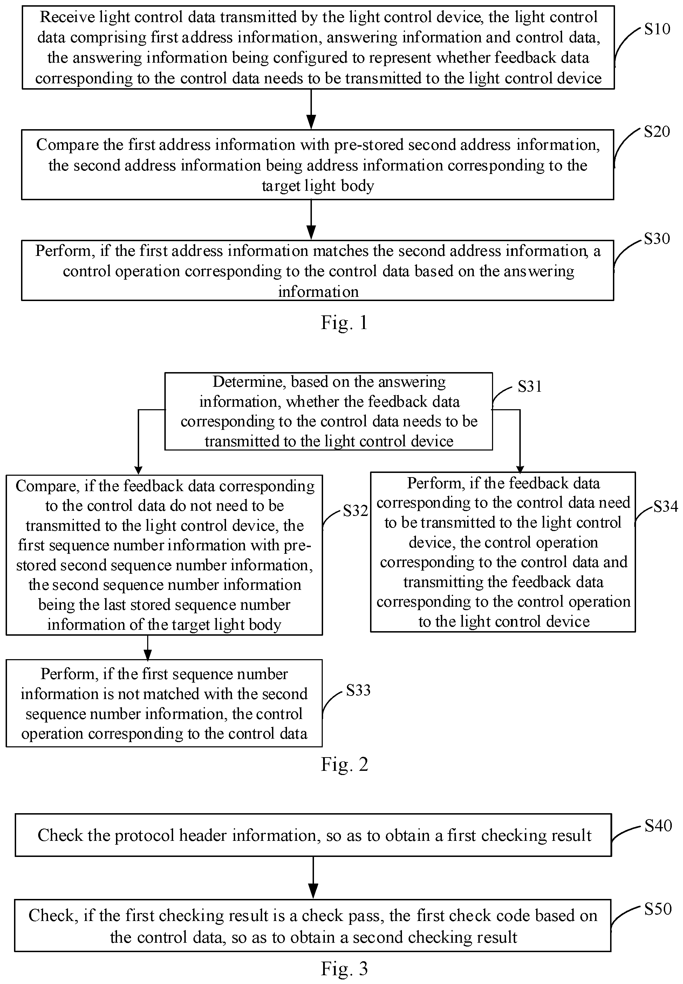

In an embodiment, provided is a method for controlling light body. The method for controlling light body is applied in a target light body of a light body control system. The light body control system includes a light control device and a plurality of light bodies communicatively connected to the light control device, the target light body is one light body of the plurality of light bodies. As shown in Fig. 1, the method for controlling light body includes the following steps:

In step S 10, light control data transmitted by the light control device is received, the light control data including first address information, answering information and control data, the answering information being configured to represent whether feedback data corresponding to the control data needs to be transmitted to the light control device.

The light control data are the data transmitted to the control light body by the light control device. In order to realize the overall control of the plurality of light bodies, a light control device, in the present embodiment is set up to be communicatively connected to a plurality of light bodies, and the light control data is transmitted to all of the plurality of light bodies through the light control device. For example, the light control device is communicatively connected to light body 1, light body 2, light body 3, and light body 4, and when there is a need to adjust Correlated Color Temperature (CCT) parameters of light body 1 and light body 4, light control device transmits a CCT setting command to the light body 1, light body 2, light body 3, and light body 4 at the same time.

Since the light control device transmits light control data to all of the plurality of light bodies, i.e., light bodies that do not need to perform the control operation corresponding to the control data also receive the light control data, in order to prevent the light bodies that do not need to perform the control operation corresponding to the control data from performing the control operation, the corresponding address information, in the present embodiment, is preset for each of the plurality of light bodies. The address information is an integer with 32 bits, and each bit corresponds to a light body. As shown in Table 1, an address of 0x01 corresponds to light body 1, and an address of 0x08 corresponds to light body 4.

**Table 1 Address Information of Light Bodies**

| Light Body Number | Corresponding Binary Code | Address (integer/hexadecimal) |
|---|---|---|
| 1 | 0000 0000 0000 0001 | 0x00000001 |
| 2 | 0000 0000 0000 0010 | 0x00000002 |
| 3 | 0000 0000 0000 0100 | 0x00000004 |
| 4 | 0000 0000 0000 1000 | 0x00000008 |
| n | ... | 0x1 << (n - 1) |
| 32 | 1000 0000 0000 0000 | 0x80000000 |

The light control data include first address information, answering information, and control data. The first address information is the address information corresponding to a light body that needs to perform the control operation corresponding to the control data, for example, taking Table 1 as an example, light body 1 and light body 4 both need to perform the control operation corresponding to the control data, so that the first address information is 0x01 and 0x08.

The control data is a control instruction corresponding to a control operation that needs to be performed, and the control data varies with the control operation that needs to be performed by the light body. For example, the control data may be a timing CCT setting instruction, a timing temperature data read instruction, an instant CCT setting instruction, an instant temperature data read instruction, etc.

The answering information is configured to represent whether the feedback data corresponding to the control data needs to be transmitted to the light control device, and the answering information varies with the control data. For example, if the control data are the timing CCT setting instruction, the answering information is 0, which represents that the feedback data corresponding to the control data do not need to be transmitted to the light control device; and if the control data is a timing temperature data read instruction, the answering information is 1, which represents that the feedback data corresponding to the control data needs to be transmitted to the light control device.

In step S20, the first address information is compared with pre-stored second address information, the second address information being address information corresponding to the target light body.

The second address information is the address information corresponding to the target light body, for example, taking Table 1 as an example, if the target light body is light body 1, the second address information is 0x01, and if the target light body is light body 3, the second address information is 0x04. After the target light body in the present embodiment receives the light control data transmitted by the light control device, the first address information in the light control data is compared with its own corresponding second address information to determine whether the control operation corresponding to the control data needs to be performed.

In step S30, if the first address information matches the second address information, a control operation corresponding to the control data is performed based on the answering information.

The first address information matching the second address information means that the first address information contains the second address information. For example, if the first address information is 0x01 and 0x08 and the second address information is 0x01, then the first address information matches the second address information; if the first address information is 0x01 and 0x08 and the second address information is 0x04, then the first address information does not match the second address information.

In the present embodiment the first address information is compared with the second address information. If the first address information matches the second address information, it is indicated that the target light body needs to perform the control operation corresponding to the control data, and then the control operation corresponding to the control data is performed based on the answering information; Conversely, if the first address information does not match the second address information, it is indicated that the target light body does not need to perform the control operation corresponding to the control data, and then the light control data is ignored.

In a specific implementation, the light control data further includes first sequence number information. As shown in Fig. 2, in step S30, the control operation corresponding to the control data being performed based on the answering information includes the followings steps:
in step S31, it is determined whether the feedback data corresponding to the control data needs to be transmitted to the light control device based on the answering information;
in step S32, if the feedback data corresponding to the control data do not need to be transmitted to the light control device, the first sequence number information is compared with pre-stored second sequence number information, the second sequence number information being the last stored sequence number information of the target light body; and
in step S33, if the first sequence number information is not matched with the second sequence number information, the control operation corresponding to the control data is performed.

If the control data are the timing setting instruction, such as the timing CCT setting instruction, a timing color mode (Hue-Saturation-Intensity (Lightness), HSI or HSL) setting instruction, in order to ensure normal communication between the light control device and the plurality of light bodies, the light control device transmits the light control data to the plurality of light bodies for at least three times. In order to prevent the light bodies from repeatedly performing the control operation, in the present embodiment, the light control data transmitted to the light body by the light control device further includes first sequence number information, and the first sequence number information is a packet sequence number of the light control data.

After the light body receives the light control data and performs the control operation corresponding to the light control data, the sequence number information in the light control data received at that time is saved, the second sequence number information is the sequence number information last stored by the target light body, and it can be determined whether the target light body has performed the control operation corresponding to the light control data based on the first sequence number information and the second sequence number information.

Specifically, in the present embodiment, when performing the control operation corresponding to the control data based on the answering information, it is firstly determined, based on the answering information, whether the feedback information corresponding to the control data needs to be transmitted to the light control device, the first sequence number information is compared with the second sequence number information if the feedback information corresponding to the control data does not need to be transmitted to the light control device, and it is indicated that the control operation corresponding to the control data has not been performed if the first sequence number information does not match the second sequence number information, so that the control operation corresponding to the control data is performed; and conversely, it is indicated that the control operation corresponding to the control data has already been performed if the first sequence number information matches the second sequence number information, so that there is no need to repeat the control operation corresponding to the control data.

In a specific implementation, after it is determined that whether the feedback data corresponding to the control data needs to be transmitted to the light control device based on the answering information, the method further includes the followings steps:

In step S34, if the feedback data corresponding to the control data needs to be transmitted to the light control device, the control operation corresponding to the control data and transmitting the feedback data corresponding to the control operation to the light control device.

If the control data are a timing data read/write instruction, an instant data read/write instruction, an instant setting instruction, an upgrade instruction, the feedback data corresponding to the control data needs to be transmitted to the light control device, so that, at this point, the control operation corresponding to the control data is performed and the feedback data corresponding to the control operation are transmitted to the light control device.

In a specific implementation, the control data includes a first setting instruction, and/or a data read instruction, and/or an upgrade instruction, and the step S34 in which the control operation corresponding to the control data is performed and the feedback data corresponding to the control operation are transmitted to the light control device, includes the following steps:
in step S341, a first setting operation corresponding to the first setting instruction is performed and a setting result corresponding to the first setting operation to the light control device is transmitted;
in step S342, target data are determined based on the data read instructions, the target data are packed, and the packaged target data are transmitted to the light control device; and
in step S342, an upgrade operation is performed based on the upgrade instruction, and an upgrade result corresponding to the upgrade operation is transmitted to the light control device.

In a specific implementation, the control data includes at least one of a first setting instruction, a data read instruction, and an upgrade instruction. The first setting instruction is a user-defined instant setting instruction, such as an instant CCT setting instruction, an instant HIS setting instruction. The data read instruction may include a first data read instruction and/or a second data read instruction. The first data read instruction is a timing data read instruction, for example, reading temperature data of the light body every 2 seconds. The second data read instruction is a user-defined instant data read instruction, for example, a temperature data read instruction of reading temperature data of the light body transmitted through the light control device by the user. The upgrading instruction is an instruction for upgrading the light body, which is usually a user-defined instant instruction.

In a specific implementation, if the control data includes the first setting instruction, the step of the control operation corresponding to the control data being performed and the feedback data corresponding to the control operation being transmitted to the light control device includes the following steps: a first setting operation corresponding to the first setting instruction is performed and a setting result corresponding to the first setting operation is transmitted to the light control device. For example, the first setting instruction is the instant HSI setting instruction, and the target light body adjusts its own color mode based on the control data and transmits the color mode adjustment result to the light control device, so that the overall adjustment of the color modes of the plurality of light bodies can be achieved.

In a specific implementation, if the control data includes the data read instruction the step of the control operation corresponding to the control data being performed and the feedback data corresponding to the control operation being transmitted to the light control device specifically includes the following steps: target data are determined based on the data read instructions, the target data are packaged, and the packaged target data are transmitted to the light control device. For example, if the control data are the temperature data read instruction, temperature data are determined to be the target data and packed, the packaged temperature data are transmitted to the light control device, and therefore it can be realized that a data reading operation can be performed on the plurality of light bodies at the same time.

In a specific implementation, if the control data includes the upgrade instruction, the step of the control operation corresponding to the control data being performed and the feedback data corresponding to the control operation being transmitted to the light control device includes the following steps: an upgrade operation is performed based on the upgrade instruction, and an upgrade result corresponding to the upgrade operation is transmitted to the light control device, and therefore it can be realized that the plurality of light bodies are controlled through a single light control device to upgrade at the same time.

In a specific implementation, the light control data further includes protocol header information and a first check code. As shown in Fig.3, before the step S20 in which the first address information is compared with the pre-stored second address information, the method further includes the following steps:
in step S40, the protocol header information is checked, so as to obtain a first checking result; and
in step S50, if the first checking result is a check pass, the first check code is checked based on the control data, so as to obtain a second checking result.

In order to improve the accuracy of the light body control, the light control data further includes protocol header information and a first check code, and before the first address information is the compared with the pre-stored second address information, the protocol header information may be checked, so as to obtain a first checking result, if the first checking result is a check pass, the first check code is checked based on the control data checking, so as to obtain a second checking result, and if the second checking result is a check pass, it is indicated that the control data received by the target light body is complete and accurate, and then the first address information is compared with the second address information. Conversely, if the first checking result is a check failure or the second checking result is a check failure, it is indicated that the control data received by the target light body is inaccurate, so that no operation is performed.

Specifically, the step of the protocol header information being checked may specifically include the following steps: the binary inverse codes of the protocol header information are summed, it is determined that the check of the protocol header information passes if the obtained summing result is a preset result, and conversely, it is determined that the check of the protocol header information fails if the obtained summing result is not a preset result. For example, the binary inverse codes of each sixteen bits in the protocol header information are summed, it is determined that the check of the protocol header information passes if the obtained summing result consists entirely of the 1, and it is determined that the check of the protocol header information fails if the obtained summing result does not consist entirely of 1.

Further, the step of the first check code being checked based on the control data may specifically include the following steps: a second check code is generated based on the control data and a preset check polynomial; the second check code is compared with the first check code, and if the second check code matches the first check code, it is determined that the check of the first check code passes; and conversely, if the second check code does not match the first check code, it is determined that the check of the first check code fails.

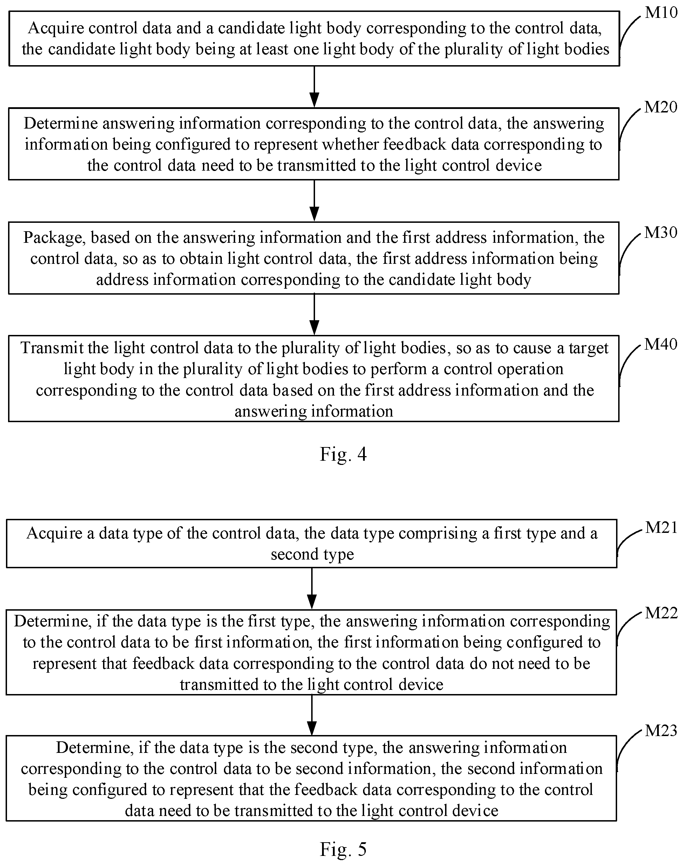

In an embodiment, provided is a method for controlling light body. The method for controlling light body is applied in a light control device of a light body control system. The light body control system includes the light control device and a plurality of light bodies communicatively connected to the light control device. As shown in Fig. 4, the method for controlling light body includes the following steps:
in steps M10, control data and a candidate light body corresponding to the control data are acquired, the candidate light body being at least one light body of the plurality of light bodies.

The control data is a control instruction corresponding to a control operation that need to be performed by the light body, and the control data varies with the control operation that needs to be performed by the light body. For example, the control data may be a timing CCT setting instruction, a timing temperature data read instruction, an instant CCT setting instruction, an instant temperature data read instruction, etc.

The candidate light body is a light body of the plurality of light bodies that needs to perform the control operation corresponding to the control data. For example, the plurality of light bodies includes light body 1, light body 2, light body 3, and light body 4, and if the light body 1 and the light body 4 need to perform the control operation corresponding to the control data, both light body 1 and light body 4 are the candidate light bodies.

In step M20, answering information corresponding to the control data is determined, the answering information being configured to represent whether feedback data corresponding to the control data needs to be transmitted to the light control device.

The answering information is configured to represent whether feedback data corresponding to the control data needs to be transmitted to the light control device. In the present embodiment, after the light control device acquires the control data and the candidate light body corresponding to the control data, the answering information corresponding to the control data is determined, so that the light control data are generated based on the answering information in a subsequent step. For example, if the control data is a timing setting instruction, the answering information is determined to be 0; and if the control data is a timing data read instruction, an instant setting instruction, an instant data read instruction, an upgrade instruction, etc., the answering information is determined to be 1.

In step M30, the control data are packed based on the answering information and the first address information, so as to obtain light control data, the first address information being address information corresponding to the candidate light body.

The first address information is the address information corresponding to the candidate light body, for example, still taking the foregoing Table 1 as an example, if the candidate light bodies are light body 1 and light body 4, the first address information is 0x01 and 0x08. In the present embodiment, when the light control device determines the answering information corresponding to the control data, the control data is packaged based on the answering information and the address information corresponding to the candidate light body, so as to obtain the light control data.

In step M40, the light control data are transmitted to the plurality of light bodies, so as to cause a target light body in the plurality of light bodies to perform a control operation corresponding to the control data based on the first address information and the answering information.

In the present embodiment, the light control device, after acquiring the light control data, transmits the light control data to the plurality of light bodies. Since the light control data includes first address information and answering information, the plurality of light bodies, after receiving the light control data, may perform the control operation corresponding to the control data based on the first address information and the answering information, so as to realize the overall control of the plurality of light bodies.

In a specific implementation, as shown in Fig. 5, the step M20 in which the answering information corresponding to the control data are determined includes following steps:
in step M21, a data type of the control data is acquired, the data type including a first type and a second type;
in step M22, if the data type is the first type, the answering information corresponding to the control data is determined to be first information, the first information being configured to represent that feedback data corresponding to the control data do not need to be transmitted to the light control device; and
in step M23, if the data type is the second type, the answering information corresponding to the control data is determined to be second information, the second information being configured to represent that the feedback data corresponding to the control data needs to be transmitted to the light control device.

The data type includes the first type and second type. The first type is a data type representing that the feedback data corresponding to the control data do not need to be transmitted to the light control device. The second information is a data type representing that the feedback data corresponding to the control data needs to be transmitted to the light control device. The control data may be a first setting instruction (instant setting instruction), a second setting instruction (timing setting instruction), a first data read instruction (timing data read instruction), a second data read instruction (instant data read instruction), an upgrade instruction, or the like. If the control data is a first setting instruction, the data type of the control data is the first type; and if the control data is a second setting instruction, a first data read instruction, a second data read instruction, an upgrade instruction, or the like, the data type of the control data is the second type.

The answering information includes first information and second information. The first information is configured to represent that the feedback data corresponding to the control data do not need to be transmitted to the light control device. The second information is configured to represent that the feedback data corresponding to the control data needs to be transmitted to the light control device. For example, the first information is 0, and the second information is 1.

In the present embodiment, when determining the answering information corresponding to the control data, the data type of the control data is firstly acquired, if the data type is the first type, the answering information corresponding to the control data is determined to be the first information, and if the data type is a second type, the answering information corresponding to the control data is determined to be the second information. For example, if the control data is a first setting instruction (instant setting instruction), the answering information corresponding to the control data is determined to be 0, and when the control data is a second setting instruction, the answering information corresponding to the control data is determined to be 1.

In a specific implementation, if the control data is a first setting instruction, the step M40 in which the light control data are transmitted to the plurality of light bodies includes the following steps:
in step M41, the light control data are added to a tail node of a pre-constructed linked list, and node data in the linked list are transmitted to the plurality of light bodies in accordance with a preset first timing time and a preset number of times.

The first setting instruction is a timing setting instruction. If the light control data is the first setting instruction (timing setting instruction), when transmitting the light control data to the plurality of light bodies, the light control data may be added to a tail node of a pre-constructed unidirectional linked list, and node data in the linked list are transmitted to the plurality of light bodies in accordance with a preset first timing time and a preset number of times. In the present embodiment, the light control data are transmitted through the unidirectional linked list, which is requested when it needs to be used, and the memory can be released by deleting the contents after the use is completed, so that the memory can be used more efficiently.

In order to ensure that each packet of control data is transmitted to the plurality of light bodies in accordance with the principle of first-triggered-first-sent, when transmitting the node data in the linked list to a plurality of light bodies, the first node data of the linked list can be transmitted to the plurality of light bodies in accordance with the preset first timing time and the preset number of times, then the first node data of the linked list are deleted and the data behind the node are shifted forward as a whole to replace the first node data, and the step of the first node data of the linked list being transmitted to the plurality of light bodies in accordance with the preset first timing time and the preset number of times is continues to be performed, until all of the node data in the linked list are transmitted to the plurality of light bodies. For example, the first node data of the linked list are timed to be transmitted every 100 milliseconds and are repeatedly transmitted three times, and after transmitted three times, the first node data of the linked list are deleted and the data behind the node are shifted forward as a whole to replace the first node data.

In a specific implementation, if the control data includes a plurality of data subitems and the plurality of data subitems are different first data read instructions, the step M40 in which the light control data are transmitted to the plurality of light bodies includes the following steps:
in step M42, a timeout time for each of the plurality of data subitems is determined based on a second timing time for each of the plurality of data subitems;
in step M43, timeout sorting is performed on the plurality of data subitems based on the timeout time, so as to obtain a timeout sorting result for the plurality of data subitems; and
in step M44, the plurality of data subitems are transmitted to the plurality of light bodies based on the timeout sorting result.

The first data read instruction is the timing data read instruction. If the control data includes a plurality of data subitems and the plurality of data subitems are different timing data read instructions, firstly, the second timing time for each of the plurality of data subitems is acquired and the timeout time for each of the plurality of data subitems is determined based on the second timing time, then the timeout sorting is performed on the plurality of data subitems based on the timeout time, so as to obtain a timeout sorting result for the plurality of data subitems, finally, a data subitem with a longest timeout time is determined based on the timeout sorting result, and the data subitem with the longest timeout time is transmitted to the plurality of light bodies in priority. For example, the control data includes a timing temperature read instruction, a timing speed read instruction, and a timing error read instruction, and if the timeout sorting result is the timing temperature read instruction, the timing error read instruction, the timing speed read instruction, the timing temperature read instruction is transmitted to the plurality of light bodies in priority.

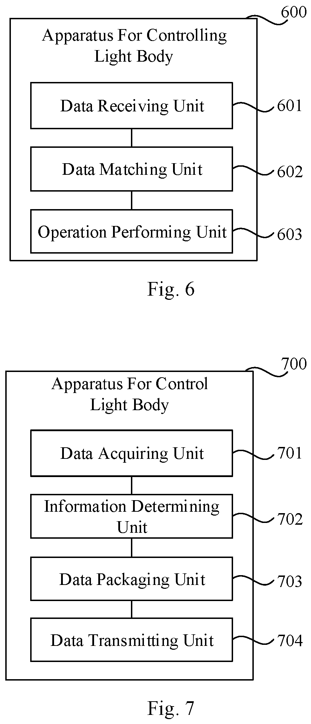

In order to better realize the method for controlling light body in the embodiments of the present application, on the basis of the method for controlling light body, further provided in an embodiment of the present application is an apparatus for controlling light body. The apparatus for controlling light body is applied in a target light body of a light body control system. The light body control system includes a light control device and a plurality of light bodies communicatively connected to the light control device, and the target light body is one light body of the plurality of light bodies. As shown in Fig. 6, the apparatus for controlling light body 600 includes:
a data receiving unit 601, configured to receive light control data transmitted by the light control device, the light control data including first address information, answering information and control data, the answering information configured to represent whether feedback data corresponding to the control data needs to be transmitted to the light control device;
a data matching unit 602, configured to compare the first address information with pre-stored second address information, the second address information being address information corresponding to the target light body; and
operation performing unit 603, configured to perform a control operation corresponding to the control data based on the answering information if the first address information matches the second address information.

In the embodiment of the present application, the first address information is compared with the pre-stored second address information, the control operation corresponding to the control data is performed based on the answering information if the first address information matches the second address information, and after the light control device transmits the light control data to the plurality of light bodies, the target light body in the plurality of light bodies can determine whether the control operation corresponding to the control data is performed based on the first address information, so as to realize overall control of the plurality of light bodies through a single light control device. After it is determined that the control operation corresponding to the control data needs to be performed, the control operation corresponding to the control data is performed based on the answering information, which is capable of improving the accuracy of the light body control.

In some implementations of the present application, the light control data further includes first sequence number information, and the operation performing unit 603 is specifically configured to:
determine, based on the answering information, whether the feedback data corresponding to the control data needs to be transmitted to the light control device;
compare, if the feedback data corresponding to the control data do not need to be transmitted to the light control device, the first sequence number information with pre-stored second sequence number information, the second sequence number information being the last stored sequence number information of the target light body; and
perform, if the first sequence number information is not matched with the second sequence number information, the control operation corresponding to the control data.

In some implementations of the present application, the operation performing unit 603 is further configured to:
perform, if the feedback data corresponding to the control data needs to be transmitted to the light control device, the control operation corresponding to the control data and transmit the feedback data corresponding to the control operation to the light control device.

In some implementations of the present application, the control data includes a first setting instruction, and/or a data read instruction, and/or an upgrade instruction, and the operation performing unit 603 is specifically further configured to:
perform a first setting operation corresponding to the first setting instruction and transmitting a setting result corresponding to the first setting operation to the light control device;
   and/or,
determine target data based on the data read instructions, packaging the target data, and transmitting the packaged target data to the light control device;
   and/or,
perform, based on the upgrade instruction, an upgrade operation, and transmitting an upgrade result corresponding to the upgrade operation to the light control device.

In some implementations of the present application, the light control data further includes protocol header information and a first check code, and the apparatus for controlling light body 600 further includes:
a first checking unit, configured to check the protocol header information, so as to obtain a first checking result; and
a second checking unit, configured to check the first check code based on the control data if the first checking result is a check pass, so as to obtain a second checking result.

In order to better realize the method for controlling light body in the embodiments of the present application, on the basis of the method for controlling light body, further provided in an embodiment of the present application is an apparatus for controlling light body. The apparatus for controlling light body is applied in a light control device of a light body control system. The light body control system includes the light control device and a plurality of light bodies communicatively connected to the light control device. As shown in Fig. 7, the apparatus for controlling light body includes:
a data acquiring unit 701, configured to acquire control data and a candidate light body corresponding to the control data, the candidate light body being at least one light body of the plurality of light bodies;
an information determining unit 702, configured to determine answering information corresponding to the control data, the answering information being configured to represent whether feedback data corresponding to the control data needs to be transmitted to the light control device;
a data packaging unit 703, configured to package the control data based on the answering information and the first address information, so as to obtain light control data, the first address information being address information corresponding to the candidate light body; and
a data transmitting unit 704, configured to transmit the light control data to the plurality of light bodies, so as to cause a target light body in the plurality of light bodies to perform a control operation corresponding to the control data based on the first address information and the answering information.

In some implementations of the present application, the information determining unit 702 is specifically configured to:
acquire a data type of the control data, the data type including a first type and a second type;
determining, if the data type is the first type, the answering information corresponding to the control data to be first information, the first information being configured to represent that feedback data corresponding to the control data do not need to be transmitted to the light control device; and
determining, if the data type is the second type, the answering information corresponding to the control data to be second information, the second information being configured to represent that the feedback data corresponding to the control data needs to be transmitted to the light control device.

In some implementations of the present application, if the control data is a first setting instruction, the data transmitting unit 704 is specifically configured to:
add the light control data to a tail node of a pre-constructed chain table, and transmitting node data in the chain table to the plurality of light bodies in accordance with a preset first timing time and a preset number of times.

In some implementations of the present application, if the control data includes a plurality of data subitems and the plurality of data subitems are different first data read instructions, the data transmitting unit 704 is specifically configured to:
determine, based on a second timing time for each of the plurality of data subitems, a timeout time for each of the plurality of data subitems;
perform, based on the timeout time, timeout sorting on the plurality of data subitems, so as to obtain a timeout sorting result for the plurality of data subitems; and
transmit, based on the timeout sorting result, the plurality of data subitems to the plurality of light bodies.

Further provided in an embodiment of the present application is a computer device, which is integrated with any one of the apparatuses for controlling light body provided according to the embodiments of the present disclosure. The computer device includes:
one or more processors;
a memory; and
one or more application programs. The one or more application programs are stored in the processor, and configured to be executed by the one or more processors to implement the steps of the method for controlling light body in any one of the method for controlling light body embodiments.

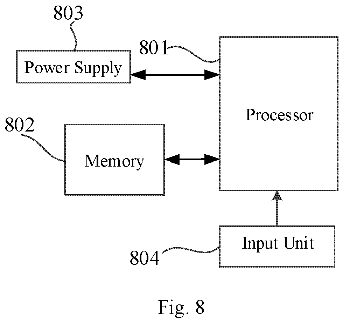

Further provided in an embodiment of the present application is a computer device, which is integrated with any one of the apparatuses for controlling light body provided according to the embodiments of the present disclosure. As shown in Fig. 8, Fig. 8 illustrates a schematic diagram of a structure of the computer device involved in the embodiments of the present application.

The computer device may include components such as a processor 801 with one or more processor cores, a memory 802 with one or more computer-readable storage media, a power supply 803, and an input unit 804. It is to be understood by those skilled in the art that the structure of the computing device illustrated in Fig. 8 does not constitute a limitation of the computing device, which may include more or fewer components than those illustrated, or a combination of some components, or a different arrangement of components.

The processor 801 is the control center of the computing device, connects to various parts of the entire computing device by utilizing various interfaces and lines, and performs various functions of the computing device and processes data by running or executing software programs and/or modules stored in the memory 802 and by invoking data stored in the memory 802, thereby monitoring of the entire computing device. Optionally, the processor 801 may include one or more processor cores. In an implementation, the processor 801 may be integrated with an application processor and a modem processor, the application processor mainly processes operating systems, user interfaces and applications, etc., and the modem processor mainly processes wireless communications. It is to be understood that the above modem processor described may not be integrated into the processor 801.

The memory 802 may be configured to store software programs and modules, and the processor 801 performs various function applications and data processing by running the software programs and the modules stored in the memory 802. The memory 802 may mainly include a storage program area and a storage data area. The storage program area may store an operating system, an application program required for at least one function (e.g., a sound playback function, an image playback function, etc.), etc. The storage data area may store data created in accordance with the use of the computer device, etc. In addition, the memory 802 may include a high-speed random access memory, and may further include a non-transitory memory, such as at least one disk memory device, a flash memory device, or other non-transitory solid state memory device. Accordingly, the memory 802 may further include a memory controller to provide access to the memory 802 for the processor 801.

The computer device further includes the power supply 803 configured to supply power to the various components. In an implementation, the power supply 803 may be logically connected to the processor 801 through a power management system, so that functions such as charging management discharging management, and power consumption management can be realized through the power management system. The power supply 803 may further include any components such as one or more DC or AC power supplies, a recharging system, a power failure detection circuit, a power converter or inverter, and a power status indicator.

The computer device may further include an input unit 804, which may be configured to receive inputting numeric or character information, and to generate a signal input of keyboard, mouse, joystick, optical, or trackball related to user settings and function control.

Although not shown, the computer device may further include a display unit, and the like, which will not be repeated herein. Specifically, in the present embodiment, the processor 801 in the computer device loads the executable file corresponding to the process of one or more applications into the memory 802 and runs the applications stored in the memory 802 in accordance with instructions, so as to realize various functions, and the instructions are as follows:
receiving light control data transmitted by the light control device, the light control data including first address information, answering information and control data, the answering information being configured to represent whether feedback data corresponding to the control data needs to be transmitted to the light control device;
comparing the first address information with pre-stored second address information, the second address information being address information corresponding to the target light body; and
performing, if the first address information matches the second address information, a control operation corresponding to the control data based on the answering information.

It is to be understood by those skilled in the art that all or some of the steps of the various methods in the above embodiments may be implemented by instructions, or by associated hardware controlled by the instructions. The instructions may be stored in a computer-readable storage medium and loaded and executed by a processor.

Accordingly, provided in an embodiment of the present disclosure is a non-transitory computer readable memory medium, may including Read Only Memory (ROM), Random Access Memory (RAM), Random Access Memory, disk, or CD-ROM, etc. A computer program is stored on the non-transitory computer readable memory medium, the computer program is loaded by a processor to cause steps of any one of the methods for controlling light body provided according to the embodiments of the present application to be performed. For example, the computer program, when loaded by the processor, may cause the following steps to be performed:
receiving light control data transmitted by the light control device, the light control data including first address information, answering information and control data, the answering information being configured to represent whether feedback data corresponding to the control data needs to be transmitted to the light control device;
comparing the first address information with pre-stored second address information, the second address information being address information corresponding to the target light body; and
performing, if the first address information matches the second address information, a control operation corresponding to the control data based on the answering information.

In the above embodiments, the description of each embodiment has its own focus, and that are not described in detail in an embodiment may be found in the detailed description above for other embodiments, which will not be repeated herein.

In a specific implementation, each of the above units or structures may be realized as an independent entity, or be realized as the same entity or a number of entities by any combination, and the specific implementation of each of the above units or structures may refer to the previous method embodiments, which will not be repeated herein.

The specific implementation of each of the above operations may refer to the previous embodiments, which will not be repeated herein.

In the above embodiments of the present application, provided are detailed descriptions of the method and the apparatus for controlling light body, the computer device, and the non-transitory storage media. Specific examples are applied to elaborate the principle of and implementation of the present application and the descriptions in the above embodiments are only used to help understand the method of the application and its core ideas. In addition, for those skilled in the art, there will be changes in the specific implementation and application scope in accordance with the idea of the present application. Therefore, the contents of this specification should not be interpreted as a limitation of the present application.

## Claims

1. A method for controlling light body, applied in a target light body of a light body control system, wherein the light body control system comprises a light control device and a plurality of light bodies communicatively connected to the light control device, the target light body is one light body of the plurality of light bodies, and the method comprises:
receiving light control data transmitted by the light control device, the light control data comprising first address information, answering information and control data, the answering information being configured to represent whether feedback data corresponding to the control data needs to be transmitted to the light control device;
comparing the first address information with pre-stored second address information, the second address information being address information corresponding to the target light body; and
performing, if the first address information matches the second address information, a control operation corresponding to the control data based on the answering information.

2. The method for controlling light body according to claim 1, wherein the light control data further comprises first sequence number information, and the performing the control operation corresponding to the control data based on the answering information comprises:
determining, based on the answering information, whether the feedback data corresponding to the control data needs to be transmitted to the light control device;
comparing, if the feedback data corresponding to the control data do not need to be transmitted to the light control device, the first sequence number information with pre-stored second sequence number information, the second sequence number information being last stored sequence number information of the target light body; and
performing, if the first sequence number information is not matched with the second sequence number information, the control operation corresponding to the control data.

3. The method for controlling light body according to claim 2, wherein after the determining, based on the answering information, whether the feedback data corresponding to the control data needs to be transmitted to the light control device, the method further comprises:
performing, if the feedback data corresponding to the control data needs to be transmitted to the light control device, the control operation corresponding to the control data and transmitting the feedback data corresponding to the control operation to the light control device.

4. The method for controlling light body according to claim 3, wherein the control data comprises a first setting instruction, and/or a data read instruction, and/or an upgrade instruction, and the performing a control operation corresponding to the control data and transmitting feedback data corresponding to the control operation to the light control device comprises:
performing a first setting operation corresponding to the first setting instruction and transmitting a setting result corresponding to the first setting operation to the light control device;
and/or,
determining target data based on the data read instructions, packaging the target data, and transmitting the packaged target data to the light control device;
and/or,
performing, based on the upgrade instruction, an upgrade operation, and transmitting an upgrade result corresponding to the upgrade operation to the light control device.

5. The method for controlling light body according to claim 1, wherein the light control data further comprises protocol header information and a first check code, and before the comparing the first address information with the pre-stored second address information, the method further comprises:
checking the protocol header information, so as to obtain a first checking result; and
checking, if the first checking result is a check pass, the first check code based on the control data, so as to obtain a second checking result.

6. A method for controlling light body, applied in a light control device of a light body control system, wherein the light body control system comprises the light control device and a plurality of light bodies communicatively connected to the light control device, and the method for controlling light body comprises:
acquiring control data and a candidate light body corresponding to the control data, the candidate light body being at least one light body of the plurality of light bodies;
determining answering information corresponding to the control data, the answering information being configured to represent whether feedback data corresponding to the control data needs to be transmitted to the light control device;
packaging, based on the answering information and first address information, the control data, so as to obtain light control data, the first address information being address information corresponding to the candidate light body; and
transmitting the light control data to the plurality of light bodies, so as to cause a target light body in the plurality of light bodies to perform a control operation corresponding to the control data based on the first address information and the answering information.

7. The method for controlling light body according to claim 6, wherein the determining the answering information corresponding to the control data comprises:
acquiring a data type of the control data, the data type comprising a first type and a second type;
determining, if the data type is the first type, the answering information corresponding to the control data to be first information, the first information being configured to represent that feedback data corresponding to the control data do not need to be transmitted to the light control device; and
determining, if the data type is the second type, the answering information corresponding to the control data to be second information, the second information being configured to represent that the feedback data corresponding to the control data needs to be transmitted to the light control device.

8. The method for controlling light body according to claim 6, wherein if the control data is a first setting instruction, the transmitting the light control data to the plurality of light bodies comprises:
adding the light control data to a tail node of a pre-constructed linked list, and transmitting node data in the linked list to the plurality of light bodies in accordance with a preset first timing time and a preset number of times.

9. The method for controlling light body according to claim 6, wherein, if the control data comprises a plurality of data subitems and the plurality of data subitems are different first data read instructions, the transmitting the light control data to the plurality of light bodies comprises:
determining, based on a second timing time for each of the plurality of data subitems, a timeout time for each of the plurality of data subitems;
perform, based on the timeout time, timeout sorting on the plurality of data subitems, so as to obtain a timeout sorting result for the plurality of data subitems; and
transmitting, based on the timeout sorting result, the plurality of data subitems to the plurality of light bodies.

10. A apparatus for controlling light body, applied in a target light body of a light body control system, wherein the light body control system comprises a light control device and a plurality of light bodies communicatively connected to the light control device, the target light body is one light body of the plurality of light bodies, and the apparatus comprises:
a data receiving unit, configured to receive light control data transmitted by the light control device, the light control data comprising first address information, answering information and control data, the answering information configured to represent whether feedback data corresponding to the control data needs to be transmitted to the light control device;
a data matching unit, configured to compare the first address information with pre-stored second address information, the second address information being address information corresponding to the target light body; and
operation performing unit, configured to perform a control operation corresponding to the control data based on the answering information if the first address information matches the second address information.

11. A computer device, comprising:
one or more processors;
a memory; and
one or more application programs, wherein the one or more application programs are stored in the processor, and configured to be executed by the one or more processors to implement the method for controlling light body as claimed in any one of claims 1 to 9.

12. A non-transitory computer readable memory medium, wherein a computer program is stored thereon, the computer program is loaded by a processor to cause steps in the method for controlling light body as claimed in any one of claims 1 to 9 to be implemented.
